(19) Europäisches Patentamt / European Patent Office / Office européen des brevets

(11) **EP 4 749 539 A1**

(12) **EUROPEAN PATENT APPLICATION**

(43) Date of publication:
**27.05.2026   Bulletin 2026/22**

(21) Application number: **25213026.5**

(22) Date of filing: **03.11.2025**

(51) International Patent Classification (IPC):
**G06Q 10/04** (2023.01)    **G01W 1/10** (2006.01)
**G06F 17/16** (2006.01)    **G06F 18/10** (2023.01)
**G06F 18/27** (2023.01)    **G06Q 50/06** (2024.01)
**H02J 3/00** (2026.01)

(52) Cooperative Patent Classification (CPC):
**G06Q 10/04; G01W 1/10; G06F 17/16; G06F 17/18; G06Q 50/06; H02J 3/004; H02J 3/381**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.11.2024   CN 202411697131**

(71) Applicant: **State Power Rixin Tech. Co., LTD.
Beijing 100096 (CN)**

(72) Inventors:
• **XIANG, Jie**
  **Beijing, 100096 (CN)**
• **YONG, Zheng**
  **Beijing, 100096 (CN)**
• **CHEN, Longjing**
  **Beijing, 100096 (CN)**

(74) Representative: **Michalski Hüttermann & Partner
Patentanwälte mbB
Kaistraße 16A
40221 Düsseldorf (DE)**

(54) **WIND AND SOLAR POWER PREDICTION METHOD AND APPARATUS BASED ON METEOROLOGICAL LARGE MODEL**

(57) A wind and solar power prediction method and apparatus based on a meteorological large model are provided by the present application. The method includes: creating a meteorological large model ensemble forecast data set (ENS0), and performing ensemble assimilation and forecasting to obtain a deterministic forecast data set (F0); constructing a fine-tuning localization matrix, and performing exhaustive search and selection to obtain a deterministic grid forecast data set (F100) based on the fine-tuning localization matrix and the meteorological large model ensemble forecast data set (ENS0); performing spatial scale separation on the deterministic grid forecast data set (F100), and performing exhaustive search and selection to obtain a meteorological large model deterministic grid forecast data set (D100); and calculating weights by using historical gridded data of the meteorological large model deterministic grid forecast data set (D100), and performing a weighted average according to the weights to obtain a fused power prediction time series.

FIG. 1

EP 4 749 539 A1

## Description

## FIELD

The present application relates to the technical field of renewable-energy power and, more particularly, to a wind and solar power prediction method and apparatus based on a meteorological large model.

## BACKGROUND

With a growth in a scale of renewable-energy power generation such as wind energy and solar energy, more than half of a newly installed power generation capacity in recent years are from power generation by using renewable-energy sources. However, due to the inherent characteristics of renewable-energy such as intermittency and volatility, how to accurately predict the wind and solar power generation power and reduce the impact of the volatility on the power grid is a major issue currently faced by renewable-energy power prediction.

The optimization targets of traditional data assimilation and numerical weather forecasting technologies often fail to take into account renewable-energy meteorological elements and renewable-energy power prediction, but only focus on the optimization of traditional meteorological elements. When a forecast field is used, various spatial scales are also used in combination. Neither the renewable-energy meteorological elements are used as the optimization target when an initial field is created, nor are the signals of the spatial scales of the forecast field optimized or corrected. The renewable-energy meteorological element prediction and power prediction results exists great risks in the application of the initial field creation and forecast field. Thus, there is a certain deviation in the renewable-energy meteorological element prediction. For example, when data assimilation based on ensemble forecasts is performed, key technical aspects such as the calculation and optimization of the localization matrix often do not pay attention to the precision of the renewable-energy meteorological element prediction. In addition, the dynamic frameworks and physical schemes used in the existing numerical weather forecast are not perfect, and the error levels of prediction signals at different spatial scales are often different. However, in the existing renewable-energy meteorological element prediction, various spatial scales are often mixed without distinguishing, thus large errors in the power prediction are introduced.

## SUMMARY

A wind and solar power prediction method and apparatus based on a meteorological large model are provided by the present application, which comprehensively consider the influence of renewable-energy meteorological element prediction and power prediction on a localization matrix in data assimilation, distinguishes deviation levels of meteorological large model gridded forecast data at different spatial scales and the impacts as input on the renewable-energy power prediction. Thus, the stability and accuracy of renewable-energy power prediction may be significantly improved.

In order to achieve the above-mentioned objects, technical solutions of the present application are implemented as follows.

In a first aspect, a renewable-energy wind and solar power prediction method based on a meteorological large model is provided by the present application, which includes:

S1, creating a meteorological large model ensemble forecast data set ENSO, and performing ensemble assimilation and forecasting to obtain a deterministic forecast data set F0;

S2, constructing a fine-tuning localization matrix, and performing exhaustive search and selection to obtain a meteorological large model deterministic grid forecast data set F100 based on the fine-tuning localization matrix and the meteorological large model ensemble forecast data set ENSO;

S3, performing spatial scale separation on the meteorological large model deterministic grid forecast data set F100, and performing exhaustive search and selection to obtain a meteorological large model deterministic grid forecast data set D100; and

S4, calculating weights by using historical gridded data of the meteorological large model deterministic grid forecast data set D100, calculating a power prediction time series by using future forecast gridded data of the meteorological large model deterministic grid forecast data set D100, and performing a weighted average according to the weights to obtain a fused power prediction time series.

Further, S1 specifically comprises:

S11, creating an ensemble initial field required by a meteorological large model ensemble forecast, adding initial perturbations based on a deterministic forecast of a meteorological center, and performing forecasting by using the meteorological large model with initial fields of ensemble members as input to obtain a set of meteorological large model ensemble forecast data sets ENSO; and

S12, acquiring an available meteorological observation data set OBSO of global assimilation system joint effort for data assimilation integration (JEDI); calculating a localization matrix L0 based on the meteorological large model ensemble forecast data set ENSO, and assimilating the meteorological observation data set OBSO; updating a forecast field of the meteorological large model to obtain an analysis field; and using the analysis field as input of a numerical weather forecast or the meteorological large model to obtain the deterministic forecast data set F0.

Further, S2 specifically comprises:

S21, constructing, for a sub-matrix corresponding to a certain meteorological element variable in the localization matrix L0, a fine-tuning coefficient matrix, wherein values of the fine-tuning coefficient matrix are Gaussian weights centered on a renewable-energy station and attenuated to a periphery; combinatorially traversing and adjusting amplitudes and influence ranges of the weights to form a set of matrices corresponding to the Gaussian weights to constitute the fine-tuning coefficient matrix $C_{tuning}$; and multiplying, in response to combinatorially traversing and adjusting the amplitudes and the influence ranges of the Gaussian weights, fine-tuning coefficient matrices constructed by adjusted Gaussian weights element-wise with corresponding localization matrices to obtain the fine-tuning localization matrix $L_{tuning}$ through exhaustive grid search; and

S22, performing, for a sub-matrix of all meteorological elements corresponding to a certain combination of amplitude and influence range in the fine-tuning localization matrix $L_{tuning}$, ensemble assimilation and forecasting based on the sub-matrix and the meteorological large model ensemble forecast data set ENSO to obtain a corresponding meteorological large model deterministic forecast data set F1; and traversing all combinations of the amplitude and the influence range of the fine-tuning localization matrix $L_{tuning}$ to obtain a set of meteorological large model deterministic grid forecast data sets $F100_{all}$ corresponding to the fine-tuning localization matrix $L_{tuning}$; establishing a first mapping relationship between a historical prediction data set in the set of meteorological large model deterministic grid forecast data sets $F100_{all}$ and corresponding measured power values in a same historical period, substituting a future prediction data set of a sub-data set in the set of meteorological large model deterministic grid forecast data sets $F100_{all}$ into the first mapping relationship to obtain a set of power forecasts, and calculating errors between the power forecasts and measured power values in a same period; and traversing the set of meteorological large model deterministic grid forecast data sets $F100_{all}$, and eliminating based on the errors to obtain a traversal-optimally-selected meteorological large model deterministic grid forecast data set F100.

Further, S3 specifically comprises:

S31, calculating, for gridded data of each member and each meteorological element of the meteorological large model deterministic grid forecast data set F100, correlation coefficients between each grid point and other grid points, and counting relationships between the correlation coefficients and grid point spacing to obtain grid point spacing corresponding to a significant local extreme value with the correlation coefficient greater than a threshold value as a correlation spatial scale separation coefficient corresponding to the gridded data;

performing, for the gridded data of each member and each meteorological element of the meteorological large model deterministic grid forecast data set F100, power spectrum analysis in meridional and zonal directions to obtain a spatial scale corresponding to a local extreme value greater than a statistical test value as a power spectrum spatial scale separation coefficient corresponding to the gridded data; and

constituting a spatial scale separation coefficient vector $C_{filter}$ of the meteorological large model deterministic grid forecast data set F100 by using the correlation spatial scale separation coefficient and the power spectrum spatial scale separation coefficient; and

S32, using, for the gridded data of each member and each meteorological element of the meteorological large model deterministic grid forecast data set F100, and a sub-vector of the spatial scale separation coefficient vector $C_{filter}$ corresponding to the gridded data, elements in the sub-vector in a descending order as truncated spatial scales to perform two-dimensional locally weighted regression on the gridded data, retaining low-pass fields, and sequentially and recursively performing two-dimensional locally weighted regression on high-pass fields to obtain a set of spatial scale-separated deterministic grid forecast data sets $F100_{filter}$ corresponding to the spatial scale separation coefficient vector $C_{filter}$; and establishing a second mapping relationship between a historical prediction data set in the deterministic grid prediction data set $F100_{filter}$ and corresponding measured power values in a same historical period; substituting a future prediction data set of a sub-data set of the deterministic grid prediction data set $F100_{filter}$ into the second mapping relationship to obtain a set of power forecasts, and calculating errors between the obtained power forecasts and measured power values in a same period; and traversing the deterministic grid forecast data set $F100_{filter}$, and eliminating based on the errors to obtain a traversal-optimally-selected meteorological large model deterministic grid forecast data set D100.

In a second aspect, a wind and solar power prediction apparatus based on a meteorological large model is further provided by the present application, which includes:

a data set module, configured to create a meteorological large model ensemble forecast data set ENSO, and perform ensemble assimilation and forecasting to obtain a deterministic forecast data set F0;

a fine-tuning localization module, configured to construct a fine-tuning localization matrix, and perform exhaustive search and selection to obtain a meteorological large model deterministic grid forecast data set F100 based on the fine-tuning localization matrix and the meteorological large model ensemble forecast data set ENSO;

a scale separation module, configured to perform spatial scale separation on the meteorological large model deterministic grid forecast data set F100, and perform exhaustive search and selection to obtain a meteorological large model deterministic grid forecast data set D100; and

a power prediction module, configured to calculate weights by using historical gridded data of the meteorological large model deterministic grid forecast data set D100, calculate a power prediction time series by using future forecast gridded data of the meteorological large model deterministic grid forecast data set D100, and perform a weighted average according to the weights to obtain a fused power prediction time series.

Further, the data set module comprises:

an ensemble forecast data set unit, configured to create an ensemble initial field required for by a meteorological large model ensemble forecast, add initial perturbations based on a deterministic forecast of a meteorological center, and perform forecasting by using the meteorological large model with initial fields of ensemble members as input to obtain a set of meteorological large model ensemble forecast data sets ENSO; and

a deterministic forecast data set unit, configured to acquire an available meteorological observation data set OBSO of global assimilation system JEDI; calculate a localization matrix L0 based on the meteorological large model ensemble forecast data set ENSO, and assimilate the meteorological observation data set OBSO; update a forecast field of the meteorological large model to obtain an analysis field; and use the analysis field as input of a numerical weather forecast or the meteorological large model to obtain the deterministic forecast data set F0.

Further, the fine-tuning localization module comprises:

a fine-tuning localization matrix unit, configured to construct, for a sub-matrix corresponding to a certain meteorological element variable in the localization matrix L0, a fine-tuning coefficient matrix, wherein values of the fine-tuning coefficient matrix are Gaussian weights centered on a renewable-energy station and attenuated to a periphery; combinatorially traverse and adjust amplitudes and influence ranges of the weights to form a set of matrices corresponding to the Gaussian weights to constitute the fine-tuning coefficient matrix $C_{tuning}$; and multiply, in response to combinatorially traversing and adjusting the amplitudes and the influence ranges of the Gaussian weights, fine-tuning coefficient matrices constructed by adjusted Gaussian weights element-wise with corresponding localization matrices to obtain the fine-tuning localization matrix $L_{tuning}$ through exhaustive grid search; and

a first exhaustive search and selection unit, configured to perform, for a sub-matrix of all meteorological elements corresponding to a certain combination of amplitude and influence range in the fine-tuning localization matrix, ensemble assimilation and forecasting based on the sub-matrix and the meteorological large model ensemble forecast data set ENSO to obtain a corresponding meteorological large model deterministic forecast data set F1; and traverse all combinations of the amplitude and the influence range of the fine-tuning localization matrix $L_{tuning}$ to obtain a set of meteorological large model deterministic grid forecast data sets $F100_{all}$ corresponding to the fine-tuning localization matrix $L_{tuning}$; establish a first mapping relationship between a historical prediction data set in the set of meteorological large model deterministic grid forecast data sets $F100_{all}$ and corresponding measured power values in a same historical period, substitute a future prediction data set of a sub-data set in the set of meteorological large model deterministic grid forecast data sets $F100_{all}$ into the first mapping relationship to obtain a set of power forecasts, and calculate errors between the power forecasts and measured power values in a same period; and traverse the set of meteorological large model deterministic grid forecast data sets $F100_{all}$, and eliminate based on the errors to obtain a traversal-optimally-selected meteorological large model deterministic grid forecast data set F100.

Further, the scale separation module comprises:

a separation coefficient vector unit, configured to calculate, for gridded data of each member and each meteorological element of the meteorological large model deterministic grid forecast data set F100, correlation coefficients between each grid point and other grid points, and count relationships between the correlation coefficients and grid point spacing to obtain grid point spacing corresponding to a significant local extreme value with the correlation coefficient greater than a threshold value as a correlation spatial scale separation coefficient corresponding to the gridded data;

perform, for the gridded data of each member and each meteorological element of the meteorological large model deterministic grid forecast data set F100, power spectrum analysis in meridional and zonal directions to obtain a spatial scale corresponding to a local extreme value greater than a statistical test value as a power spectrum spatial scale separation coefficient corresponding to the gridded data; and

constitute a spatial scale separation coefficient vector $C_{filter}$ of the meteorological large model deterministic grid forecast data set F100 by using the correlation spatial scale separation coefficient and the power spectrum spatial scale separation coefficient; and

a second exhaustive search and selection unit, configured to use, for the gridded data of each member and each meteorological element of the meteorological large model deterministic grid forecast data set F100, and a sub-vector of the spatial scale separation coefficient vector $C_{filter}$ corresponding to the gridded data, elements in the sub-vector in a descending order as truncated spatial scales to perform two-dimensional locally weighted regression on the gridded data, retain low-pass fields, and sequentially and recursively perform two-dimensional locally weighted regression on high-pass fields to obtain a set of spatial scale-separated deterministic grid forecast data sets $F100_{filter}$ corresponding to the spatial scale separation coefficient vector $C_{filter}$; and establish a second mapping relationship between a historical prediction data set in the deterministic grid prediction data set $F100_{filter}$ and corresponding measured power values in a same historical period; substitute a future prediction data set of a sub-data set of the deterministic grid prediction data set $F100_{filter}$ into the second mapping relationship to obtain a set of power forecasts, and calculate errors between the obtained power forecasts and measured power values in a same period; and traverse the deterministic grid forecast data set $F100_{filter}$, and eliminate based on the errors to obtain a traversal-optimally-selected meteorological large model deterministic grid forecast data set D100.

Compared with the related art, the present application has the following beneficial effects.

1) In the present application, the technical characteristics of high efficiency and high precision of the meteorological large model are fully leveraged, the key technical aspects of localization matrix calculation in the traditional numerical weather forecast and ensemble assimilation in data assimilation technology are optimized, the renewable-energy power prediction error is used as an optimization target, and data assimilation and renewable-energy prediction are organically integrated so that the effects of the numerical weather forecast and the data assimilation technology may be effectively improved, thereby the precision of renewable-energy meteorological element prediction and power prediction is improved.

2) In the present application, the spatial scale with a small error and good forecast quality among the spatial scales of the meteorological large model and the corresponding gridded data are screened out through spatial scale separation and optimal selection of the meteorological large model gridded forecast data so that noise signals predicted by the meteorological large model renewable-energy meteorological elements may be effectively removed, and the precision of photovoltaic or wind power prediction with a meteorological source optimized through spatial scale separation as the input is further improved.

## BRIEF DESCRIPTION OF THE DRAWINGS

FIG. 1 is a schematic flowchart of an embodiment of the present application;

FIG. 2 is a schematic diagram of detailed steps contained in S101 according to an embodiment of the present application;

FIG. 3 is a schematic diagram of detailed steps contained in S102 according to an embodiment of the present application;

FIG. 4 is a schematic diagram of detailed steps contained in S103 according to an embodiment of the present application; and

FIG. 5 is a schematic block diagram of a wind and solar power prediction apparatus based on a meteorological large model according to the present application.

## DETAILED DESCRIPTION

It should be noted that the embodiments of the present application and the features of the embodiments may be combined with each other without conflict.

In order to make the objects and features of the present application more obvious and easier to understand, specific implementations of the present application will be further described below with reference to the drawings.

First, the technical terms involved in the present embodiment are described as follows.

A numerical weather forecast, which can be implemented by a person skilled in the art based on the present disclosure, means: performing numerical calculations through a large computer according to the actual situation of the atmosphere under certain initial value and boundary value conditions, to solve the equation groups of fluid mechanics and thermodynamics describing the weather evolution process, and predict the atmospheric thermodynamic state and weather phenomena in a certain period of time in the future.

Data assimilation, which can be implemented by a person skilled in the art based on the present disclosure, means: comparing and adjusting the latest observation data (such as temperature, humidity, and wind speed) with output of a numerical weather forecast model to correct and update initial conditions of the model to provide a process of the optimal estimate of the atmospheric state. Data assimilation often uses an ensemble forecast as input to evaluate the error of the output of the numerical weather forecast model.

A meteorological large model, which can be implemented by a person skilled in the art based on the present disclosure, means: deeply integrating and mining various data sources such as meteorological observation data and the output of the numerical weather forecast model using artificial intelligence and big data technology, especially deep learning algorithms, to build a high-precision forecast model that can capture the complexity and nonlinear characteristics of atmospheric motion. By training and learning historical meteorological data, these models can automatically extract the regularity and characteristics of the atmospheric motion, and then predict future weather conditions.

An ensemble forecast, which can be implemented by a person skilled in the art based on the present disclosure, means that: for a set of different forecast results at the same effective forecast time, the difference between forecasts may provide information about the probability distribution of the forecasted quantity. Forecasts in the ensemble forecast may have different initial conditions, boundary conditions, and parameter settings, and may even be generated by using completely independent numerical weather forecast models.

A localization matrix, which can be implemented by a person skilled in the art based on the present disclosure, means: a tool configured to reduce or eliminate the influence of long-distance observation data on analysis variables in the process of meteorological data assimilation. The main purpose of localization is to limit an influence range of the observation data on the analysis variables, thus avoiding errors introduced due to inaccurate or unreliable long-distance correlations. In the data assimilation based on the ensemble forecast, if an ensemble forecast with a limited number of members is used, long-distance spurious correlations will often be introduced into the background covariance, thus reducing the quality of data assimilation. Therefore, it is necessary to introduce the localization matrix to make the background covariance only consider the correlation within the local region.

Locally weighted regression, which can be implemented by a person skilled in the art based on the present disclosure, means: a nonparametric regression method configured for fitting a regression model in a local region of data. Different from the global regression method, the locally weighted regression performs weighted fitting within the local region near each to-be-predicted point, which enables the model to better capture the local structure and changes of the data. The above characteristics of the locally weighted regression make this method often used for two-dimensional spatial filtering.

Planetary scale, which can be implemented by a person skilled in the art based on the present disclosure , means: atmospheric phenomena and processes that affect the entire earth or most of the earth. These phenomena usually have a very large spatial scale, usually over thousands of kilometers, and last for a long time, which may range from days to weeks or even longer.

A power spectrum, which can be implemented by a person skilled in the art based on the present disclosure, means: the power distribution of a signal over different frequency components. It represents the change of signal power with frequency, i.e., the distribution of signal power in frequency domain. The power spectrum represents the change relationship between the signal power and the frequency.

Power spectral density, which can be implemented by a person skilled in the art based on the present disclosure, means: the distribution density of signal power over frequency. It provides the power distribution of a signal per unit frequency and is the frequency-normalized form of the power spectrum.

A GraphCast meteorological large model, which can be implemented by a person skilled in the art based on the present disclosure, means: a global medium-range weather forecast model based on a graph neural network (GNN) developed by the Google DeepMind team and others. The model has made remarkable progress in the field of weather forecasting, providing unprecedented accuracy and efficiency.

A NeuralGCM meteorological large model, which can be implemented by a person skilled in the art based on the present disclosure, means: a global medium-range weather forecast model developed by the Google Research team and others that combines a physical model and a machine learning model. It shows excellent performance in weather forecasting and climate simulation and opens up new avenues for future climate research and application.

In the present application, in order to solve the problem of improving the precision of renewable-energy meteorological element prediction and power prediction at multiple spatial scales, renewable-energy meteorological element prediction and power prediction are used as optimization targets based on the deterministic forecast and ensemble forecast produced by the world mainstream meteorological large model, a data-assimilated localization matrix is fine-tuned and optimally selected, meteorological large model gridded forecast data is scale-separated, and meteorological large model data of different spatial scales is optimally selected as the renewable-energy power prediction input, thereby corrected future numerical weather forecast data is obtained, and the precision of renewable-energy meteorological element prediction and photovoltaic or wind power prediction is improved.

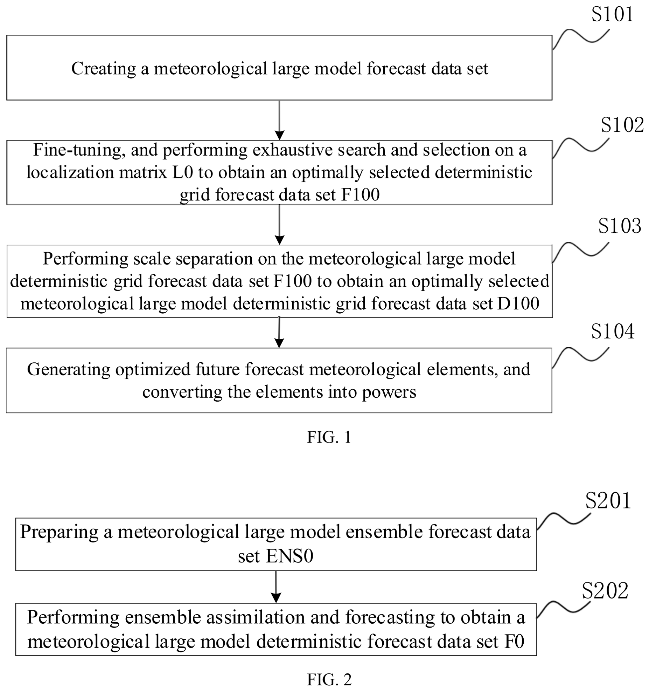

Based on the above design idea, the method of the present embodiment is shown in FIG. 1 and specifically includes: S101, S102, S103 and S104.

S101, creating a meteorological large model forecast data set.

First, a meteorological large model ensemble forecast data set ENSO is prepared.

Ensemble forecast data of major world meteorological centers, deterministic forecast data of the major world meteorological centers with random perturbations, or self-produced global ensemble assimilation-updated analysis field data may be used as input data of an ensemble forecast. The above-mentioned input data is adopted to drive one or more meteorological large models for forecasting to obtain a set of meteorological large model ensemble forecast data sets ENSO.

Then, ensemble assimilation and forecasting are performed to obtain a meteorological large model deterministic forecast data set F0.

The deterministic forecast data of the major world meteorological centers or forecast data of the meteorological large model may be used as a background field of data assimilation. A localization matrix L0 is calculated using an empirical constant localization matrix or according to ENSO. The meteorological large model ensemble forecast data set ENSO and the localization matrix L0 are used as input, and ensemble-variational assimilation is performed on the background field to obtain a data-assimilated analysis field. The analysis field is used as input of the numerical weather forecast or the meteorological large model for forecasting to obtain a forecast field, thereby setting renewable-energy-related meteorological elements as optimization objectives when an initial field is created.

The above steps are repeated to obtain the meteorological large model ensemble forecast data sets ENSO and the deterministic forecast data sets F0 for the historical prediction and future prediction.

S102, fine-tuning, and performing exhaustive search and selection on the localization matrix L0 to obtain an optimally selected deterministic grid forecast data set F100.

First, a fine-tuning coefficient matrix $C_{tuning}$ and a fine-tuning localization matrix $L_{tuning}$ are constructed.

For a sub-matrix corresponding to a certain meteorological element variable in the localization matrix L0, a fine-tuning coefficient matrix is constructed, and its values are Gaussian weights centered on a renewable-energy station and attenuated to a periphery. Amplitudes and influence ranges of the weights may be adjusted. The amplitudes and influence ranges of the weights are combinatorially traversed and adjusted. The amplitude adjustment may cause a value of a localization matrix of a renewable-energy station site to change from a grid spacing scale to the planetary scale, and the influence range adjustment can cause the influence range of the Gaussian weight to change from the grid spacing scale to the planetary scale. The amplitudes and influence ranges of the weights are combinatorially traversed and adjusted to form a set of matrices corresponding to the Gaussian weights to constitute the fine-tuning coefficient matrix $C_{tuning}$. When the amplitudes and influence ranges of the Gaussian weights are combinatorially traversed and adjusted, fine-tuning coefficient matrices including adjusted Gaussian weights are multiplied element-wise with corresponding localization matrices to obtain the fine-tuning localization matrix $L_{tuning}$ through exhaustive grid search, thereby setting renewable-energy-related meteorological elements as optimization objectives when an initial field is created and performing optimization of bias correction on components at different spatial scales of the forecast filed.

Traversal, which belongs to common sense in the art, means: calculating and processing all possible values or changes of a certain parameter or matrix one by one to ensure that all potential candidate situations are covered to obtain a complete candidate result set.

Exhaustive grid search, which belongs to common sense in the art, means: combining, in the case of multi-parameter dimensions, values of the parameters, and performing traversal calculations on all combinations one by one. For example, when the localization matrix is fine-tuned, all possible values of the amplitudes and influence ranges of the Gaussian weights are combined and traversed one by one to obtain a corresponding series of fine-tuning coefficient matrices and fine-tuning localization matrices.

Then, exhaustive search and selection are performed on the meteorological large model deterministic grid forecast data set F100.

For a sub-matrix of all meteorological elements corresponding to a combination of a certain amplitude and a certain influence range in the fine-tuning localization matrix, the process of ensemble assimilation and forecasting in S101 is repeated based on the sub-matrix and the meteorological large model ensemble forecast data set ENSO to obtain a corresponding meteorological large model deterministic forecast data set. All combinations of the amplitude and the influence range of the fine-tuning localization matrix are traversed, and the above steps are repeated to obtain a set of meteorological large model deterministic forecast data sets corresponding to the fine-tuning localization matrix. A mapping relationship between a historical prediction data set in the set of meteorological large model deterministic forecast data sets and corresponding measured power values in the same historical period is established. A meteorological large model future prediction data set is substituted into the mapping relationship to obtain a set of power forecasts, and errors between the power forecasts and measured power values in the same period are further calculated. Exhaustive search and selection are performed on the meteorological large model deterministic forecasts based on the errors, and forecasts with large errors are eliminated to obtain a traversal-optimally-selected meteorological large model deterministic grid forecast data set F100, thereby focusing the calculation and tuning of the localization matrix on improving the accuracy of renewable-energy meteorological element prediction.

Exhaustive search and selection, which belongs to common sense in the art, means: screening a set of candidate results obtained through traversal based on preset evaluation indexes (such as prediction error magnitude), eliminating results with poor effect, and retaining results with good prediction performance, to obtain an optimally selected data set.

S103, performing scale separation on the meteorological large model deterministic grid forecast data set F100 to obtain an optimally selected meteorological large model deterministic grid forecast data set D100.

First, a spatial scale separation coefficient vector $C_{filter}$ is constructed.

For gridded data of each member and each meteorological element of the meteorological large model deterministic grid forecast data set F100, correlation coefficients between each grid point and other grid points are calculated, and relationships between the correlation coefficients and grid point spacing are counted to obtain grid point spacing corresponding to a local extreme value with a significant correlation coefficient as a correlation spatial scale separation coefficient corresponding to the gridded data. For the gridded data of each member and each meteorological element of the meteorological large model deterministic grid forecast data set F100, power spectrum analysis is performed in meridional and zonal directions to obtain a spatial scale corresponding to a local extreme value greater than a statistical test value as a power spectrum spatial scale separation coefficient corresponding to the gridded data. The correlation spatial scale separation coefficient and the power spectrum spatial scale separation coefficient of the meteorological large model deterministic grid forecast data set F100 together constitute the spatial scale separation coefficient vector $C_{filter}$ of the meteorological large model deterministic grid forecast data set F100.

Then, scale-separated grid forecast data D100 is calculated and optimally selected.

For the gridded data of each member and each meteorological element of the meteorological large model deterministic grid forecast data set F100, and a sub-vector of the spatial scale separation coefficient vector $C_{filter}$ corresponding to the gridded data, elements in the sub-vector are used in a descending order as truncated spatial scales to perform two-dimensional locally weighted regression on the gridded data, low-pass fields are retained, and two-dimensional locally weighted regression is sequentially and recursively performed on high-pass fields to obtain a set of spatial scale-separated gridded data sets corresponding to the spatial scale separation coefficient vector $C_{filter}$. A mapping relationship between a historical prediction data set in the data set and corresponding measured power values in a same historical period is established. A future prediction data set in the data set is substituted into the mapping relationship to obtain a set of power forecasts, and errors between the power forecasts and measured power values in a same period are further calculated. Exhaustive search and selection are performed on the data set based on the errors, and data with a large error is eliminated to obtain a traversal-optimally-selected meteorological large model deterministic grid forecast data set D100, thereby handling the respective spatial scales separately and reducing the power-forecast error.

S104, generating optimized future forecast meteorological elements, and converting the elements into powers.

Meteorological element prediction time series or power prediction time series of the members of D100 in a certain wind farm or photovoltaic power station are calculated by using the historical gridded data of the meteorological large model deterministic grid forecast data set D100 through mathematical statistical downscaling methods such as bilinear interpolation, other statistical downscaling methods, or dynamic downscaling methods such as regional meteorological models. Then, a weighted average is performed on the meteorological element prediction time series or the power prediction time series of the wind farm or the photovoltaic power station with weights, and prediction deviations of the time series after the weighted average are calculated. Then, a weight that minimizes the prediction deviation is calculated through mathematical statistical methods such as the least squares method. Optimal weights of the members of D100 are cross-validated by using the historical gridded data of the meteorological large model deterministic grid forecast data set D100 to enhance the generalization ability of the optimal weights.

The meteorological element prediction time series or power prediction time series of the members of D100 in a certain wind farm or photovoltaic power station are calculated by using the future forecast gridded data of the meteorological large model deterministic grid forecast data set D100. Then, a weighted average is performed on the meteorological element prediction time series or the power prediction time series of the wind farm or the photovoltaic power station with the above optimal weights to obtain a fused meteorological element prediction time series or power prediction time series.

In addition, a mapping relationship between the historical gridded data of the members of the meteorological large model deterministic grid forecast data set D100 and the historical measured power values may be directly established. The above mapping relationship is cross-validated by using the historical gridded data of the meteorological large model deterministic grid forecast data set D100 and the historical measured power values to enhance the generalization ability of the mapping relationship. Then, the future forecast gridded data of the meteorological large model deterministic grid forecast data set D100 is substituted into the above mapping relationship to obtain the optimized power prediction time series.

In the present application, the influence of renewable-energy meteorological element prediction and power prediction on a localization matrix in data assimilation, distinguishing deviation levels of meteorological large model gridded forecast data at different spatial scales and the impacts of the meteorological large model gridded forecast data as input on the renewable-energy power prediction are comprehensively considered. Thus, the stability and accuracy of renewable-energy power prediction may be significantly improved.

A more detailed implementation process for S101 to S103 is provided by the present embodiment.

The detailed description of S101 is shown in FIG. 2, which includes S201 and S202.

S201, preparing a meteorological large model ensemble forecast data set ENSO.

In this step, a pure machine learning model GraphCast and a physics-machine learning hybrid model NeuralGCM are used as examples. Combined with global assimilation system joint effort for data assimilation integration (JEDI), the process of preparing the meteorological large model ensemble forecast data set ENSO is illustrated. JEDI belongs to common sense in the art and is a unified data assimilation system developed by the Joint Center for Satellite Data Assimilation (JCSDA) of the United States.

First, ensemble initial fields required by a meteorological large model ensemble forecast is created. To generate a large-scale ensemble forecast with more than 100 ensemble members, initial perturbations may be automatically added based on deterministic forecasts of major world meteorological centers using methods such as a Perlin noise method and a random number generator (RNG) noise method. Alternatively, the initial perturbations may be automatically added based on a pre-trained background covariance matrix using a gen_ens_pert_B module of the global assimilation system JEDI.

Then, the initial fields of the ensemble members are used as input, and the pure machine learning model GraphCast or the physics-machine learning hybrid model NeuralGCM is used for inference forecasting to obtain a set of ensemble forecast data sets ENSO.

If the physics-machine learning hybrid model NeuralGCM is used, methods such as the Perlin noise method and the RNG noise method may be adopted to add random perturbations to temporal prediction tendencies of variables such as temperature anomalies, atmospheric wind field vorticity, and divergence, thereby perturbing the physical process of the meteorological large model.

Then, inference forecasting is performed on the meteorological large model of each ensemble member, and then random perturbations are automatically added by using methods such as the Perlin noise method and the RNG noise method. The above steps are repeated many times to expand the ensemble discrete effect.

S202, performing ensemble assimilation and forecasting to obtain a deterministic forecast data set F0.

In this step, the pure machine learning model GraphCast and the physical-machine learning hybrid model NeuralGCM are used as examples. Combined with the global assimilation system JEDI, the process of performing ensemble assimilation based on the meteorological large model ensemble forecast data set ENSO and obtaining the deterministic forecast data set F0 is illustrated.

First, information such as spatial position information, time information, and variable information of observation data is encoded into an input/output data access (IODA) format dedicated to the JEDI system and saved. The saved observation data file in IODA format is upgraded and updated to an IODA version recognizable by the JEDI system using an ioda-upgrade.x data update program and its corresponding information conversion configuration file ObsSpaceV2-to-V3. yaml, to obtain an available meteorological observation data set OBSO of the global assimilation system JEDI.

Then, the localization matrix L0 required when calculating the ensemble background covariance based on the ensemble forecast ENSO is calculated by using a BUMP module of the JEDI. The localization matrix L0 may be set as a constant matrix based on an empirical value. Using the 3DEnVar or 4DEnVar function of the JEDI, the meteorological observation data set OBSO is assimilated, and a forecast field of the meteorological large model is updated to obtain an analysis field. The analysis field is used as input of the numerical weather forecast or the meteorological large model for forecasting to obtain a forecast field F0.

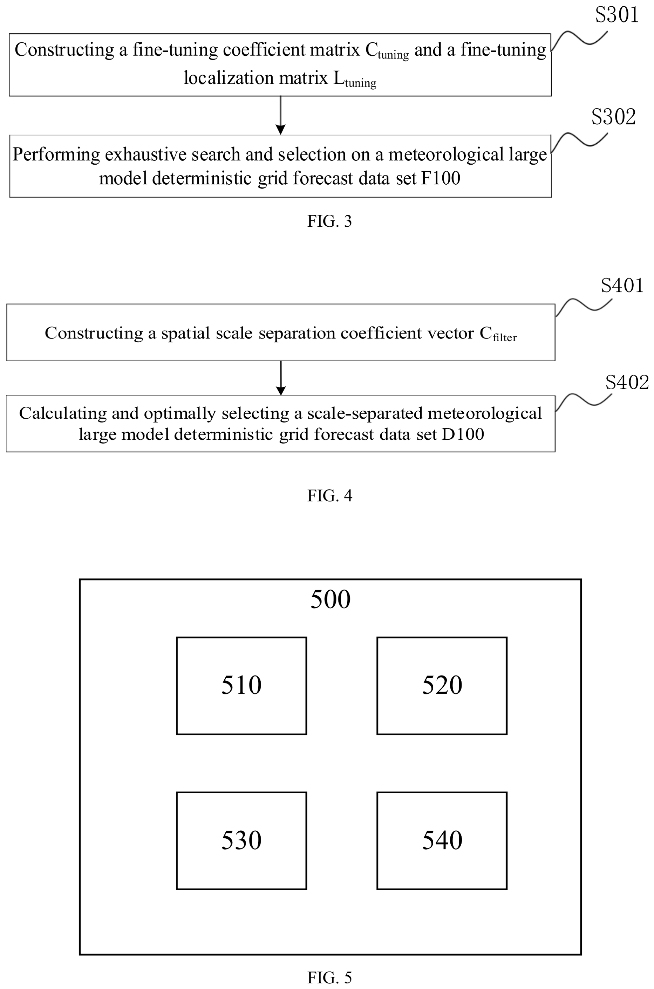

In the present embodiment, the detailed description of S102 is shown in FIG. 3, which includes S301 and S302.

S301, constructing a fine-tuning coefficient matrix $C_{tuning}$ and a fine-tuning localization matrix $L_{tuning}$.

In this step, the process of constructing the fine-tuning coefficient matrix $C_{tuning}$ and the fine-tuning localization matrix $L_{tuning}$ is illustrated.

For a sub-matrix $L0_{Var0}$ corresponding to a certain meteorological element variable Var0 in the localization matrix L0, a matrix $C0_{Var0}$ with the same shape as $L0_{Var0}$ is constructed, and its values are Gaussian weights centered on a renewable-energy station and attenuated to a periphery,

$$C0 = A0 \cdot exp\left(-\frac{r^2}{R^2}\right),$$

wherein A0 represents an amplitude of the weight, R is an influence range, and r is a distance between a certain grid point and the renewable-energy station; C0 is the above Gaussian attenuation distribution in the R range and 0 outside the R range.

Traversal adjustment of A0 may refer to changing from $min(L0_{Var0})/L0_{center}$ to $max(L0_{Var0})/L0_{center}$, wherein $max(L0_{Var0})$ is the maximum possible value of the localization matrix L0 and may be the planetary scale, $min(L0_{Var0})$ is the minimum possible value of L0 and may be the grid spacing, and $L0_{center}$ is a value of the matrix $L0_{Var0}$ at a renewable-energy station site.

Traversal adjustment of R may refer to changing from grid points adjacent to the renewable-energy station to the global range.

The combined traversal adjustment of A0 and R refers to $C0_{Var0}$ corresponding to all combinations of A0 and R forming a fine-tuning coefficient matrix for the matrix $L0_{Var0}$.

Sub-matrices of all meteorological element variables in the localization matrix L0 are traversed, and the above operations are repeated to obtain the fine-tuning coefficient matrix $C_{tuning}$.

In the above traversal adjustment process, a fine-tuned localization matrix may be obtained by multiplying the value of each grid point of $L0_{Var0}$ with the value of each grid point of $C0_{Var0}$.

The sub-matrices of all meteorological element variables in the localization matrix L0 are traversed, and the above operations are repeated to obtain the fine-tuning localization matrix $L_{tuning}$.

S302, performing exhaustive search and selection on a meteorological large model deterministic grid forecast data set F100.

In this step, the process of performing exhaustive search and selection on the meteorological large model deterministic grid forecast data set F100 is illustrated.

First, a sub-matrix of all meteorological elements corresponding to a certain combination of A0 and R in the fine-tuning localization matrix $L_{tuning}$ is denoted as a localization matrix L1.

Then, based on the ensemble forecast ENSO and the localization matrix L1, S101 is repeated to obtain a corresponding meteorological large model deterministic forecast data set F1.

Then, sub-matrices $L0_{Var0}$ corresponding to meteorological element variables Var0 and combinations of A0 and R in the fine-tuning localization matrix $L_{tuning}$ are traversed, and the above steps are repeated to obtain a set of meteorological large model deterministic grid forecast data set $F100_{all}$ corresponding to the fine-tuning localization matrix $L_{tuning}$.

Then, a mapping relationship between a historical prediction data set of a set of sub-data sets in the meteorological large model deterministic grid forecast data set $F100_{all}$ and corresponding measured power values in the same historical period is established using mathematical statistical methods such as linear regression or other machine learning methods. The above steps are repeated, sets of sub-data sets in the meteorological large model deterministic grid forecast data set

$F100_{all}$ are traversed, and mapping relationships between the sets of sub-data sets and corresponding measured power values in the same historical period are established. The mapping relationships corresponding to all sub-data sets in the meteorological large model deterministic grid forecast data set $F100_{all}$ together form a set of mapping relationships $R100_{all}$ between the historical prediction data sets in the meteorological large model deterministic grid forecast data set $F100_{all}$ and the corresponding measured power values in the same historical period.

Then, a future prediction data set of a set of sub-data sets in the meteorological large model deterministic grid forecast data set $F100_{all}$ is substituted into a corresponding sub-mapping relationship in the mapping relationship $R100_{all}$ to obtain corresponding power forecasts, and errors between the power forecasts and the measured power values in the same period are calculated. The above steps are repeated, and sets of sub-data sets in the meteorological large model deterministic grid forecast data set $F100_{all}$ are traversed to obtain power forecasts and prediction power errors corresponding to the sets of sub-data sets. The power forecasts corresponding to all sub-data sets in the meteorological large model deterministic grid forecast data set $F100_{all}$ together form a set of power forecasts $P100_{all}$. The prediction power errors corresponding to all sub-data sets in the meteorological large model deterministic grid forecast data set $F100_{all}$ together form a set of power forecast deviations $ERROR100_{all}$.

Then, is performed on $F100_{all}$ based on the errors $ERROR100_{all}$, and the $F100_{all}$ with a large error is eliminated to obtain a traversal-optimally-selected meteorological large model deterministic grid forecast data set F100.

In the present embodiment, the detailed description of S103 is shown in FIG. 4, which includes S401 and S402.

S401, constructing a spatial scale separation coefficient vector $C_{filter}$.

In this step, the process of constructing the spatial scale separation coefficient vector $C_{filter}$ is illustrated.

First, gridded data of a certain member and a certain meteorological element of the meteorological large model deterministic grid forecast data set F100 in S102 is taken.

Then, correlation coefficients for historical one-dimensional time series data corresponding to a certain grid point of the gridded data and historical one-dimensional time series data corresponding to other grid points are calculated, respectively, and relationships between the correlation coefficients and the grid point spacing are counted.

Then, through the above steps, a relationship between the average correlation coefficient of all grid points of the gridded data and the grid point spacing is statistically obtained, and the grid point spacing corresponding to a significant local extreme value is obtained, which is the correlation spatial scale separation coefficient corresponding to the gridded data. Here, the significant correlation coefficient may be greater than a certain threshold value, for example, greater than 0.5.

Then, the above steps are traversed to obtain correlation spatial scale separation coefficients corresponding to gridded data of all members and all meteorological elements of the meteorological large model deterministic grid forecast data set F100 to constitute correlation spatial scale separation coefficients $C_{corr}$ of the meteorological large model deterministic grid forecast data set F100.

Then, power spectrum analysis is performed on the gridded data in meridional and zonal directions to obtain power spectrum density of the gridded data in the meridional and zonal directions, and a spatial scale corresponding to a local extreme value greater than a statistical test value is obtained as a power spectrum spatial scale separation coefficient corresponding to the gridded data.

Then, the above steps are traversed to obtain power spectrum spatial scale separation coefficients corresponding to the gridded data of all members and all meteorological elements of the meteorological large model deterministic grid forecast data set F100 to constitute power spectrum spatial scale separation coefficients $C_{spectrum}$ of the meteorological large model deterministic grid forecast data set F100.

The correlation spatial scale separation coefficient $C_{corr}$ and the power spectrum spatial scale separation coefficient $C_{spectrum}$ of the meteorological large model deterministic grid forecast data set F100 together constitute the spatial scale separation coefficient vector $C_{filter}$ of the meteorological large model deterministic grid forecast data set F100.

S402, calculating and optimally selecting a scale-separated meteorological large model deterministic grid forecast data set D100.

In this step, the process of calculating and optimally selecting the scale-separated meteorological large model deterministic grid forecast data set D100 is illustrated.

First, the gridded data of a certain member and a certain meteorological element of the meteorological large model deterministic grid forecast data set F100 is taken.

Then, a sub-vector $C1_{filter}$ of the gridded data corresponding to the spatial scale separation coefficient vector $C_{filter}$ is taken.

Then, an element with the largest value of $C1_{filter}$ is used as a first truncated spatial scale, and two-dimensional locally weighted regression (LOESS) is performed on the gridded data to obtain a low-pass field with a scale greater than the first truncated spatial scale and a high-pass field with a scale less than the first truncated spatial scale, respectively.

Then, an element with the second largest value of $C1_{filter}$ is used as a second truncated spatial scale, and two-dimensional locally weighted regression (LOESS) is performed on the high-pass field with the scale less than the first truncated spatial scale to obtain a low-pass field with a scale greater than the second truncated spatial scale and a high-pass field with a scale less than the second truncated spatial scale, respectively.

Then, the values of the $C1_{filter}$ are taken in a descending order, and the above steps are repeated to obtain a set of spatial scale-separated gridded data $F1_{filter}$ corresponding to the $C1_{filter}$.

Then, the above steps are repeated to perform spatial scale separation on the gridded data of all members and all meteorological elements of the meteorological large model data set F100 in S102 to obtain spatial scale-separated meteorological large model deterministic grid forecast data set $F100_{filter}$ corresponding to the $C_{filter}$.

Then, a mapping relationship between a historical prediction data set of a set of sub-data sets in the meteorological large model deterministic grid forecast data set $F100_{filter}$ and corresponding measured power values in the same historical period is established by using mathematical statistical methods such as linear regression or other machine learning methods. The above steps are repeated, sets of sub-data sets in the meteorological large model deterministic grid forecast data set $F100_{filter}$ are traversed, and mapping relationships between the sets of sub-data sets and corresponding measured power values in the same historical period are established. The mapping relationships corresponding to all sub-data sets in the meteorological large model deterministic grid forecast data set $F100_{filter}$ together form a set of mapping relationships $R100_{filter}$ between the historical prediction data sets in the meteorological large model deterministic grid forecast data set $F100_{filter}$ and the corresponding measured power values in the same historical period.

Then, a future prediction data set of a set of sub-data sets in the meteorological large model deterministic grid forecast data set $F100_{filter}$ is substituted into a corresponding sub-mapping relationship in the mapping relationship $R100_{filter}$ to obtain corresponding power forecasts, and errors between the power forecasts and the measured power values in the same period are calculated. The above steps are repeated, and sets of sub-data sets in the meteorological large model deterministic grid forecast data set $F100_{filter}$ are traversed to obtain power forecasts and prediction power errors corresponding to the sets of sub-data sets. The power forecasts corresponding to all sub-data sets in the meteorological large model deterministic grid forecast data set $F100_{filter}$ together form a set of power forecasts $P100_{filter}$. The prediction power errors corresponding to all sub-data sets in the meteorological large model deterministic grid forecast data set $F100_{filter}$ together form a set of future prediction power deviations $ERROR100_{filter}$.

Then, exhaustive search and selection are performed on the $F100_{filter}$ based on the errors ERROR100$_{filter}$, and the $F100_{filter}$ with a large error is eliminated to obtain a traversal-optimally-selected meteorological large model deterministic grid forecast data set D100.

In the present embodiment, the models for forecasting or simulating include the meteorological large model, such as Pangu meteorological large model, Graphcast meteorological large model, NeuralGCM meteorological large model, and Fuxi meteorological large model, a self-developed meteorological large model, a traditional meteorological model, such as the global atmospheric simulation system model for prediction across scales (MPAS) and finite-volume cubed-sphere dynamical core (FV3), or other atmospheric models with simulation capabilities, such as various climate models, ocean models, and ocean-atmosphere coupled models. Acquiring gridded meteorological data using any mode or model to calculate the localization matrices or perform scale separation falls within the protection scope of the present application.

In the present embodiment, Gaussian distribution decreasing weights or other decreasing weights such as linear decreasing weights, inverse proportional decreasing weights, exponential decreasing weights, logarithmic decreasing weights, cosine decreasing weights, polynomial decreasing weights, hyperbolic decreasing weights, and Sigmoid decreasing weights may be used as the fine-tuning weights used in S102. Any weight function that can characterize a decrease with distance falls within the protection scope of the present application.

In the present embodiment, in the scale separation method in S103, the locally weighted regression method may be used for filtering, smoothing or filtering methods such as moving average, sliding median, sliding Gaussian weighted average, locally weighted quadratic regression, robust locally weighted regression, robust locally weighted quadratic regression, wavelet analysis method, and Savitzky-Golay smoothing method may also be used. Any method that may perform smoothing or filtering for scale separation falls within the protection scope of the present application.

As shown in FIG. 5, a wind and solar power prediction apparatus 500 based on a meteorological large model is further provided by the present application, which includes:

a data set module 510, configured to create a meteorological large model ensemble forecast data set ENSO, and perform ensemble assimilation and forecasting to obtain a deterministic forecast data set F0;
a fine-tuning localization module 520, configured to construct a fine-tuning localization matrix, and perform exhaustive search and selection to obtain a meteorological large model deterministic grid forecast data set F100 based on the fine-tuning localization matrix and the meteorological large model ensemble forecast data set ENSO;
a scale separation module 530, configured to perform spatial scale separation on the meteorological large model deterministic grid forecast data set F100, and perform exhaustive search and selection to obtain a meteorological large model deterministic grid forecast data set D100; and
a power prediction module 540, configured to calculate weights by using historical gridded data of the meteorological large model deterministic grid forecast data set D100, calculate a power prediction time series by using future forecast gridded data of the meteorological large model deterministic grid forecast data set D100, and perform a weighted average according to the weights to obtain a fused power prediction time series.

Further, the data set module 510 includes:

an ensemble forecast data set unit, configured to create an ensemble initial field required by a meteorological large model ensemble forecast, add initial perturbations based on a deterministic forecast of a meteorological center, and perform forecasting by using the meteorological large model with initial fields of ensemble members as input to obtain a set of meteorological large model ensemble forecast data sets ENSO; and
a deterministic forecast data set unit, configured to acquire an available meteorological observation data set OBSO of global assimilation system JEDI; calculate a localization matrix L0 based on the meteorological large model ensemble forecast data set ENSO, and assimilate the meteorological observation data set OBSO; update a forecast field of the meteorological large model to obtain an analysis field; and use the analysis field as input of a numerical weather forecast or the meteorological large model to obtain the deterministic forecast data set F0.

Further, the fine-tuning localization module 520 includes:

a fine-tuning localization matrix unit, configured to construct, for a sub-matrix corresponding to a certain meteorological element variable in the localization matrix L0, a fine-tuning coefficient matrix, wherein values of the fine-tuning coefficient matrix are Gaussian weights centered on a renewable-energy station and attenuated to a periphery; combinatorially traverse and adjust amplitudes and influence ranges of the weights to form a set of matrices corresponding to the Gaussian weights, so as to constitute the fine-tuning coefficient matrix $C_{tuning}$; and multiply, in response to combinatorially traversing and adjusting the amplitudes and the influence ranges of the Gaussian weights, fine-tuning coefficient matrices constructed by adjusted Gaussian weights element-wise with corresponding localization matrices to obtain the fine-tuning localization matrix $L_{tuning}$ through exhaustive grid search; and

a first exhaustive search and selection unit, configured to perform, for a sub-matrix of all meteorological elements corresponding to a certain combination of amplitude and influence range in the fine-tuning localization matrix, ensemble assimilation and forecasting based on the sub-matrix and the meteorological large model ensemble forecast data set ENSO to obtain a corresponding meteorological large model deterministic forecast data set F1; and

traverse all combinations of the amplitude and the influence range of the fine-tuning localization matrix $L_{tuning}$ to obtain a set of meteorological large model deterministic grid forecast data sets $F100_{all}$ corresponding to the fine-tuning localization matrix $L_{tuning}$; establish a first mapping relationship between a historical prediction data set in the set of meteorological large model deterministic grid forecast data sets $F100_{all}$ and corresponding measured power values in a same historical period, substitute a future prediction data set of a sub-data set in the set of meteorological large model deterministic grid forecast data sets $F100_{all}$ into the first mapping relationship to obtain a set of power forecasts, and calculate errors between the power forecasts and measured power values in a same period; and traverse the set of meteorological large model deterministic grid forecast data sets $F100_{all}$, and eliminate based on the errors to obtain a traversal-optimally-selected meteorological large model deterministic grid forecast data set F100.

Further, the scale separation module 530 includes:

a separation coefficient vector unit, configured to calculate, for gridded data of each member and each meteorological element of the meteorological large model deterministic grid forecast data set F100, correlation coefficients between each grid point and other grid points, and count relationships between the correlation coefficients and grid point spacing to obtain grid point spacing corresponding to a significant local extreme value with the correlation coefficient greater than a threshold value as a correlation spatial scale separation coefficient corresponding to the gridded data;

perform, for the gridded data of each member and each meteorological element of the meteorological large model deterministic grid forecast data set F100, power spectrum analysis in meridional and zonal directions to obtain a spatial scale corresponding to a local extreme value greater than a statistical test value as a power spectrum spatial scale separation coefficient corresponding to the gridded data;

and

constitute a spatial scale separation coefficient vector $C_{filter}$ of the meteorological large model deterministic grid forecast data set F100 by using the correlation spatial scale separation coefficient and the power spectrum spatial scale separation coefficient; and

a second exhaustive search and selection unit, configured to use, for the gridded data of each member and each meteorological element of the meteorological large model deterministic grid forecast data set F100, and a sub-vector of the spatial scale separation coefficient vector $C_{filter}$ corresponding to the gridded data, elements in the sub-vector in a descending order as truncated spatial scales to perform two-dimensional locally weighted regression on the gridded data, retain low-pass fields, and sequentially and recursively perform two-dimensional locally weighted regression on high-pass fields to obtain a set of spatial scale-separated deterministic grid forecast data sets $F100_{filter}$ corresponding to the spatial scale separation coefficient vector $C_{filter}$; and establish a second mapping relationship between a historical prediction data set in the deterministic grid prediction data set $F100_{filter}$ and corresponding measured power values in a same historical period; substitute a future prediction data set of a sub-data set of the deterministic grid prediction data set $F100_{filter}$ into the second mapping relationship to obtain a set of power forecasts, and calculate errors between the obtained power forecasts and measured power values in a same period; and traverse the deterministic grid forecast data set $F100_{filter}$, and eliminate based on the errors to obtain a traversal-optimally-selected meteorological large model deterministic grid forecast data set D100.

A method and an apparatus for fine-tuning a localization matrix in data assimilation based on a meteorological large model are provided by the present embodiment. First, the ensemble forecast and the deterministic forecast gridded data of the meteorological large model forecasts are generated. Then, the data-assimilated localization matrix is calculated and fine-tuned based on the ensemble forecast, and data assimilation and inference of the meteorological large model are performed to obtain a set of gridded forecast data. The mapping relationship between the gridded data and the measured power is established, and the prediction power is obtained. The prediction power error is calculated, and the meteorological large model gridded forecast data is optimally selected. According to this method, the key technical aspects of localization matrix calculation in the traditional numerical weather forecast and ensemble assimilation in data assimilation technology are optimized, the renewable-energy power prediction error is used as an optimization target, and data assimilation and renewable-energy prediction are organically integrated so that the effects of the numerical weather forecast and the data assimilation technology may be effectively improved, thereby the precision of the renewable-energy meteorological element prediction and the power prediction is improved.

A method and an apparatus for scale separation and selection of a meteorological large model are provided by the present embodiment. First, statistical analysis is performed on the power spectrum and correlation between grid points of the optimally selected meteorological large model gridded data to obtain the spatial scale separation coefficient. Then, two-dimensional locally weighted regression is recursively performed on the optimally selected meteorological large model gridded data according to the spatial scale separation coefficient to obtain a set of scale-separated meteorological large model gridded data. The mapping relationship between the gridded data and the measured power is established, and the prediction power is obtained. The prediction power error is calculated, and the scale-separated meteorological large model gridded forecast data is optimally selected. According to this method, the spatial scale with a small error and good forecast quality among the spatial scales of the meteorological large model and the corresponding gridded data are screened out so that noise signals predicted by the meteorological large model renewable-energy meteorological elements may be effectively removed, and the precision of photovoltaic or wind power prediction with a meteorological source optimized through spatial scale separation as the input is further improved.

The above are only preferred embodiments of the present application and are not intended to limit the present application. Any modifications, equivalents, improvements, etc. made within the spirit and principles of the present application shall fall within the protection scope of the present application.

**Claims**

1. A wind and solar power prediction method based on a meteorological large model, comprising:

   S1, creating a meteorological large model ensemble forecast data set (ENSO), and performing ensemble assimilation and forecasting to obtain a deterministic forecast data set (F0);

   S2, constructing a fine-tuning localization matrix, and performing exhaustive search and selection to obtain a meteorological large model deterministic grid forecast data set (F100) based on the fine-tuning localization matrix and the meteorological large model ensemble forecast data set (ENSO);

   S3, performing spatial scale separation on the meteorological large model deterministic grid forecast data set (F100), and performing exhaustive search and selection to obtain a meteorological large model deterministic grid forecast data set (D100); and

   S4, calculating weights by using historical gridded data of the meteorological large model deterministic grid forecast data set (D100), calculating a power prediction time series by using future forecast gridded data of the meteorological large model deterministic grid forecast data set (D100), and performing a weighted average according to the weights to obtain a fused power prediction time series.

2. The wind and solar power prediction method based on the meteorological large model according to claim 1, wherein S1 comprises:

   S11, creating an ensemble initial field required by a meteorological large model ensemble forecast, adding initial perturbations based on a deterministic forecast of a meteorological center, and performing forecasting by using the meteorological large model with initial fields of ensemble members as input to obtain a set of meteorological large model ensemble forecast data sets (ENSO); and

   S12, acquiring an available meteorological observation data set (OBSO) of global assimilation system joint effort for data assimilation integration (JEDI); calculating a localization matrix (L0) based on the meteorological large model ensemble forecast data set (ENSO), and assimilating the meteorological observation data set (OBSO); updating a forecast field of the meteorological large model to obtain an analysis field; and using the analysis field as input of a numerical weather forecast or the meteorological large model to obtain the deterministic forecast data set (F0).

3. The wind and solar power prediction method based on the meteorological large model according to claim 2, wherein S2 comprises:

   S21, constructing, for a sub-matrix corresponding to a certain meteorological element variable in the localization matrix (L0), a fine-tuning coefficient matrix, wherein values of the fine-tuning coefficient matrix are Gaussian weights centered on a renewable-energy station and attenuated to a periphery; combinatorially traversing and adjusting amplitudes and influence ranges of the weights to form a set of matrices corresponding to the Gaussian weights to constitute the fine-tuning coefficient matrix ($C_{tuning}$); and multiplying, in response to combinatorially traversing and adjusting the amplitudes and the influence ranges of the Gaussian weights, fine-tuning coefficient matrices constructed by adjusted Gaussian weights element-wise with corresponding localization matrices to obtain the fine-tuning localization matrix ($L_{tuning}$) through exhaustive grid search; and

S22, performing, for a sub-matrix of all meteorological elements corresponding to a certain combination of amplitude and influence range in the fine-tuning localization matrix ($L_{tuning}$), ensemble assimilation and forecasting based on the sub-matrix and the meteorological large model ensemble forecast data set (ENSO) to obtain a corresponding meteorological large model deterministic forecast data set (F1); and traversing all combinations of the amplitude and the influence range of the fine-tuning localization matrix ($L_{tuning}$) to obtain a set of meteorological large model deterministic grid forecast data sets ($F100_{all}$) corresponding to the fine-tuning localization matrix ($L_{tuning}$); establishing a first mapping relationship between a historical prediction data set in the set of meteorological large model deterministic grid forecast data sets ($F100_{all}$) and corresponding measured power values in a same historical period, substituting a future prediction data set of a sub-data set in the set of meteorological large model deterministic grid forecast data sets ($F100_{all}$) into the first mapping relationship to obtain a set of power forecasts, and calculating errors between the power forecasts and measured power values in a same period; and traversing the set of meteorological large model deterministic grid forecast data sets ($F100_{all}$), and eliminating based on the errors to obtain a traversal-optimally-selected meteorological large model deterministic grid forecast data set (F100).

4. The wind and solar power prediction method based on the meteorological large model according to claim 3, wherein S3 comprises:

S31, calculating, for gridded data of each member and each meteorological element of the meteorological large model deterministic grid forecast data set (F100), correlation coefficients between each grid point and other grid points, and counting relationships between the correlation coefficients and grid point spacing to obtain grid point spacing corresponding to a significant local extreme value with the correlation coefficient greater than a threshold value as a correlation spatial scale separation coefficient corresponding to the gridded data;

performing, for the gridded data of each member and each meteorological element of the meteorological large model deterministic grid forecast data set (F100), power spectrum analysis in meridional and zonal directions to obtain a spatial scale corresponding to a local extreme value greater than a statistical test value as a power spectrum spatial scale separation coefficient corresponding to the gridded data; and constituting a spatial scale separation coefficient vector ($C_{filter}$) of the meteorological large model deterministic grid forecast data set (F100) by using the correlation spatial scale separation coefficient and the power spectrum spatial scale separation coefficient; and

S32, using, for the gridded data of each member and each meteorological element of the meteorological large model deterministic grid forecast data set (F100), and a sub-vector of the spatial scale separation coefficient vector ($C_{filter}$) corresponding to the gridded data, elements in the sub-vector in a descending order as truncated spatial scales to perform two-dimensional locally weighted regression on the gridded data, retaining low-pass fields, and sequentially and recursively performing two-dimensional locally weighted regression on high-pass fields to obtain a set of spatial scale-separated deterministic grid forecast data sets ($F100_{filter}$) corresponding to the spatial scale separation coefficient vector ($C_{filter}$); and establishing a second mapping relationship between a historical prediction data set in the deterministic grid prediction data set ($F100_{filter}$) and corresponding measured power values in a same historical period; substituting a future prediction data set of a sub-data set of the deterministic grid prediction data set ($F100_{filter}$) into the second mapping relationship to obtain a set of power forecasts, and calculating errors between the obtained power forecasts and measured power values in a same period; and traversing the deterministic grid forecast data set ($F100_{filter}$), and eliminating based on the errors to obtain a traversal-optimally-selected meteorological large model deterministic grid forecast data set (D100).

5. A wind and solar power prediction apparatus based on a meteorological large model, comprising:

a data set module, configured to create a meteorological large model ensemble forecast data set (ENSO), and perform ensemble assimilation and forecasting to obtain a deterministic forecast data set (F0);
a fine-tuning localization module, configured to construct a fine-tuning localization matrix, and perform exhaustive search and selection to obtain a meteorological large model deterministic grid forecast data set (F100) based on the fine-tuning localization matrix and the meteorological large model ensemble forecast data set (ENSO);

a scale separation module, configured to perform spatial scale separation on the meteorological large model deterministic grid forecast data set (F100), and perform exhaustive search and selection to obtain a meteorological large model deterministic grid forecast data set (D100); and

a power prediction module, configured to calculate weights by using historical gridded data of the meteorological large model deterministic grid forecast data set (D100), calculate a power prediction time series by using future forecast gridded data of the meteorological large model deterministic grid forecast data set (D100), and perform a weighted average according to the weights to obtain a fused power prediction time series.

6. The wind and solar power prediction apparatus based on the meteorological large model according to claim 5, wherein the data set module comprises:

an ensemble forecast data set unit, configured to create an ensemble initial field required for by a meteorological large model ensemble forecast, add initial perturbations based on a deterministic forecast of a meteorological center, and perform forecasting by using the meteorological large model with initial fields of ensemble members as input to obtain a set of meteorological large model ensemble forecast data sets (ENSO); and

a deterministic forecast data set unit, configured to acquire an available meteorological observation data set (OBSO) of global assimilation system JEDI; calculate a localization matrix (L0) based on the meteorological large model ensemble forecast data set (ENSO), and assimilate the meteorological observation data set (OBSO); update a forecast field of the meteorological large model to obtain an analysis field; and use the analysis field as input of a numerical weather forecast or the meteorological large model to obtain the deterministic forecast data set (F0).

7. The wind and solar power prediction apparatus based on the meteorological large model according to claim 6, wherein the fine-tuning localization module comprises:

a fine-tuning localization matrix unit, configured to construct, for a sub-matrix corresponding to a certain meteorological element variable in the localization matrix (L0), a fine-tuning coefficient matrix, wherein values of the fine-tuning coefficient matrix are Gaussian weights centered on a renewable-energy station and attenuated to a periphery; combinatorially traverse and adjust amplitudes and influence ranges of the weights to form a set of matrices corresponding to the Gaussian weights to constitute the fine-tuning coefficient matrix (C_tuning); and multiply, in response to combinatorially traversing and adjusting the amplitudes and the influence ranges of the Gaussian weights, fine-tuning coefficient matrices constructed by adjusted Gaussian weights element-wise with corresponding localization matrices to obtain the fine-tuning localization matrix (L_tuning) through exhaustive grid search; and

a first exhaustive search and selection unit, configured to perform, for a sub-matrix of all meteorological elements corresponding to a certain combination of amplitude and influence range in the fine-tuning localization matrix, ensemble assimilation and forecasting based on the sub-matrix and the meteorological large model ensemble forecast data set (ENSO) to obtain a corresponding meteorological large model deterministic forecast data set (F1); and traverse all combinations of the amplitude and the influence range of the fine-tuning localization matrix (L_tuning) to obtain a set of meteorological large model deterministic grid forecast data sets (F100_all) corresponding to the fine-tuning localization matrix (L_tuning); establish a first mapping relationship between a historical prediction data set in the set of meteorological large model deterministic grid forecast data sets (F100_all) and corresponding measured power values in a same historical period, substitute a future prediction data set of a sub-data set in the set of meteorological large model deterministic grid forecast data sets (F100_all) into the first mapping relationship to obtain a set of power forecasts, and calculate errors between the power forecasts and measured power values in a same period; and traverse the set of meteorological large model deterministic grid forecast data sets (F100_all), and eliminate based on the errors to obtain a traversal-optimally-selected meteorological large model deterministic grid forecast data set (F100).

8. The wind and solar power prediction apparatus based on the meteorological large model according to claim 7, wherein the scale separation module comprises:

a separation coefficient vector unit, configured to calculate, for gridded data of each member and each meteorological element of the meteorological large model deterministic grid forecast data set (F100), correlation coefficients between each grid point and other grid points, and count relationships between the correlation coefficients and grid point spacing to obtain grid point spacing corresponding to a significant local extreme value with the correlation coefficient greater than a threshold value as a correlation spatial scale separation coefficient corresponding to the gridded data;

perform, for the gridded data of each member and each meteorological element of the meteorological large model deterministic grid forecast data set (F100), power spectrum analysis in meridional and zonal directions to obtain a spatial scale corresponding to a local extreme value greater than a statistical test value as a power spectrum spatial scale separation coefficient corresponding to the gridded data; and

constitute a spatial scale separation coefficient vector ($C_{filter}$) of the meteorological large model deterministic grid forecast data set (F100) by using the correlation spatial scale separation coefficient and the power spectrum spatial scale separation coefficient; and

a second exhaustive search and selection unit, configured to use, for the gridded data of each member and each meteorological element of the meteorological large model deterministic grid forecast data set (F100), and a sub-vector of the spatial scale separation coefficient vector ($C_{filter}$) corresponding to the gridded data, elements in the sub-vector in a descending order as truncated spatial scales to perform two-dimensional locally weighted regression on the gridded data, retain low-pass fields, and sequentially and recursively perform two-dimensional locally weighted regression on high-pass fields to obtain a set of spatial scale-separated deterministic grid forecast data sets ($F100_{filter}$) corresponding to the spatial scale separation coefficient vector ($C_{filter}$); and

establish a second mapping relationship between a historical prediction data set in the deterministic grid prediction data set ($F100_{filter}$) and corresponding measured power values in a same historical period; substitute a future prediction data set of a sub-data set of the deterministic grid prediction data set ($F100_{filter}$) into the second mapping relationship to obtain a set of power forecasts, and calculate errors between the obtained power forecasts and measured power values in a same period; and traverse the deterministic grid forecast data set ($F100_{filter}$), and eliminate based on the errors to obtain a traversal-optimally-selected meteorological large model deterministic grid forecast data set (D100).

S101

Creating a meteorological large model forecast data set

S102

Fine-tuning, and performing exhaustive search and selection on a localization matrix L0 to obtain an optimally selected deterministic grid forecast data set F100

S103

Performing scale separation on the meteorological large model deterministic grid forecast data set F100 to obtain an optimally selected meteorological large model deterministic grid forecast data set D100

S104

Generating optimized future forecast meteorological elements, and converting the elements into powers

FIG. 1

S201

Preparing a meteorological large model ensemble forecast data set ENS0

S202

Performing ensemble assimilation and forecasting to obtain a meteorological large model deterministic forecast data set F0

FIG. 2

S301

Constructing a fine-tuning coefficient matrix $C_{tuning}$ and a fine-tuning localization matrix $L_{tuning}$

S302

Performing exhaustive search and selection on a meteorological large model deterministic grid forecast data set F100

FIG. 3

S401

Constructing a spatial scale separation coefficient vector $C_{filter}$

S402

Calculating and optimally selecting a scale-separated meteorological large model deterministic grid forecast data set D100

FIG. 4

500

510

520

530

540

FIG. 5

Europäisches
Patentamt

European
Patent Office

Office européen
des brevets

**EUROPEAN SEARCH REPORT**

Application Number

EP 25 21 3026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 976 518 A (SHANGHAI ENERGY TECH DEVELOPMENT CO LTD) 31 October 2023 (2023-10-31) * abstract * * paragraph [0001] * * paragraph [0097] - paragraph [0118] * ----- | 1-8 | INV. G06Q10/04 G01W1/10 G06F17/16 G06F18/10 G06F18/27 G06Q50/06 H02J3/00 |

| TECHNICAL FIELDS SEARCHED (IPC) |
|---|
| G06Q G01K G06F H02J G01W |

The present search report has been drawn up for all claims

| Place of search | Date of completion of the search | Examiner |
|---|---|---|
| Munich | 19 March 2026 | Härdeman, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 3026

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | Publication date |
|---|---|---|---|
| CN 116976518 A | 31-10-2023 | NONE | |

EPO FORM P0459

For more details about this annex : see Official Journal of the European Patent Office, No. 12/82